# EUROPEAN PATENT SPECIFICATION

(11) **EP 0 401 316 B1**
(45) Date of publication and mention of the grant of the patent: **25.01.1995**
(21) Application number: 89910706.4
(22) Date of filing: 28.08.1989
(51) Int. Cl.: G06K 15/12, B41J 2/45

(54) **LINEAR PRINTHEAD WRITER ASSEMBLY AND MOUNT THEREFOR**
LINEARE DRUCKKOPF-SCHREIBANORDNUNG UND HALTERUNG DAFÜR
ENSEMBLE DE SCRIPTEUR DE TETE D'IMPRESSION LINEAIRE ET SON SUPPORT

(30) Priority: 02.09.1988 US 239886; 21.11.1988 US 273770; 29.12.1988 US 291834
(43) Date of publication of application: 12.12.1990
(73) Proprietor: EASTMAN KODAK COMPANY, Rochester, New York 14650-2201 (US)
(72) Inventor: BARTON, James, Thomas, Fairport, NY 14450 (US); WALKER, Jimmy, Paul, Rochester, NY 14625 (US)
(74) Representative: Blickle, K. Werner, Dipl.-Ing.
(86) International application number: US8903671
(87) International publication number: WO9003015

(56) References cited:
- US-A- 4 318 597
- US-A- 4 728 981
- PATENT ABSTRACTS OF JAPAN vol. 12, no. 343 (M-741)(3190) 14 September 1988 & JP-A-63 104858

## Description

This invention relates to a linear printhead assembly, which allows precise optical alignment of the assembly with respect to a rotary component of an apparatus, for example, a nonimpact printer.

US-A-4,728,981 shows a linear printhead assembly comprising the features of the preamble of the claim.

The lens structure of the reference, is mounted on a pair of stiffeners which are then attached directly to the printhead. Thus, the printhead and the focusing means are optically fixed with respect to each other by precisely connecting them together and the resulting assembly is mounted in the apparatus by connecting one or the other of the previously mentioned components directly to a printer frame at a position known to be correct for proper focusing of the LED's onto the appropriate surface. Because these structures are designed to rigidly fit in the frame of the printer they are reasonably resistant to displacement because of gravity or other forces associated with the mechanism.

It is an object of the invention to provide a linear printhead assembly which is readily optically alignable in a printer, or the like, and which assembly can compensate thermal expansion.

This object is accomplished by a linear printhead assembly as defined in the claim.

### BRIEF DESCRIPTION OF THE DRAWINGS

Fig. 1 is a schematic side view of an electrophotographic apparatus of a type in which the invention is useful.

Fig. 2 is a perspective view of an exposure station portion of the apparatus shown in Fig. 1.

Fig. 3 is a side cross-section of the exposure station shown in Fig. 2, the side cross-section being taken along the lines 3-3 shown in Fig. 13.

Fig. 4 is a perspective view partially exploded of a writer assembly constructed according to the invention.

Fig. 5 is a top view of the writer assembly shown in Fig. 4 with some parts missing and with a portion shown in section and a portion (circled) separated out on an enlarged scale.

### BEST MODE OF CARRYING OUT THE INVENTION

Although this invention can be used with other types of apparatus, it will be illustrated by its most probable application in a nonimpact electrophotographic printer using an LED printhead.

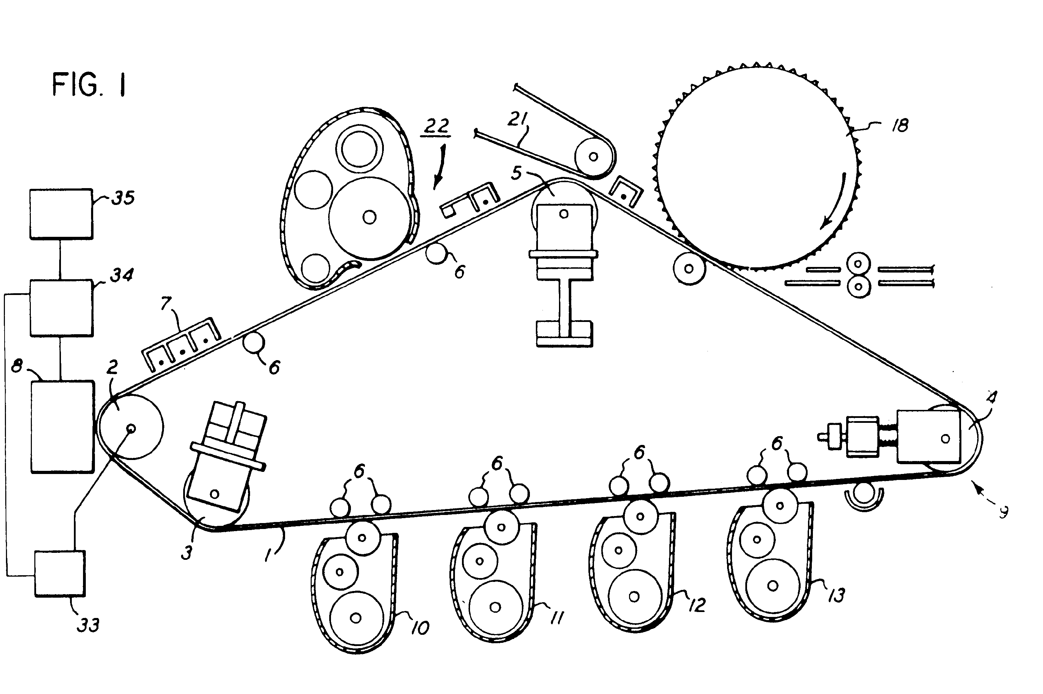

According to Fig. 1 an electrophotographic printer includes a removable film core generally designated as 9 which includes an endless electrophotographic web, belt or film 1 trained about a series of rollers 2, 3, 4 and 5 and film skis 6. The rollers and skis are attached to side plates shown, in part, in Figs. 11-13 and which make up the film core and which can be removed from the apparatus for replacement of the belt 1. In the basic electrophotographic process the belt 1 has one or more photoconductive layers on it. The belt is uniformly charged at a charging station 7 then exposed at an exposure station 8 and toned at one of toner stations 10, 11, 12 or 13. The resulting toner image is transferred to a receiving sheet at transfer station 18 and the receiving sheet is separated from the belt 1 and transported to a fuser, not shown, by a transport mechanism 21. The belt is then cleaned at a cleaning station 22 for reuse in the process, all as is well known in the art. Four toner stations 10, 11, 12 and 13 are shown permitting the application of four different colored toners to a plurality of images on the belt, which images can be transferred in registration at transfer station 18 to make a multicolor image, also as is well known in the art.

The exposure station 8 includes an LED printhead which will be described in more detail with reference to the other figures. It is driven by suitable electronics 34 as controlled by an encoder 33 which monitors the rotational displacement of printhead roller 2, also as is well known in the art. The suitable electronics 34 may receive information from a scanner, a computer, a memory or other similar source 35.

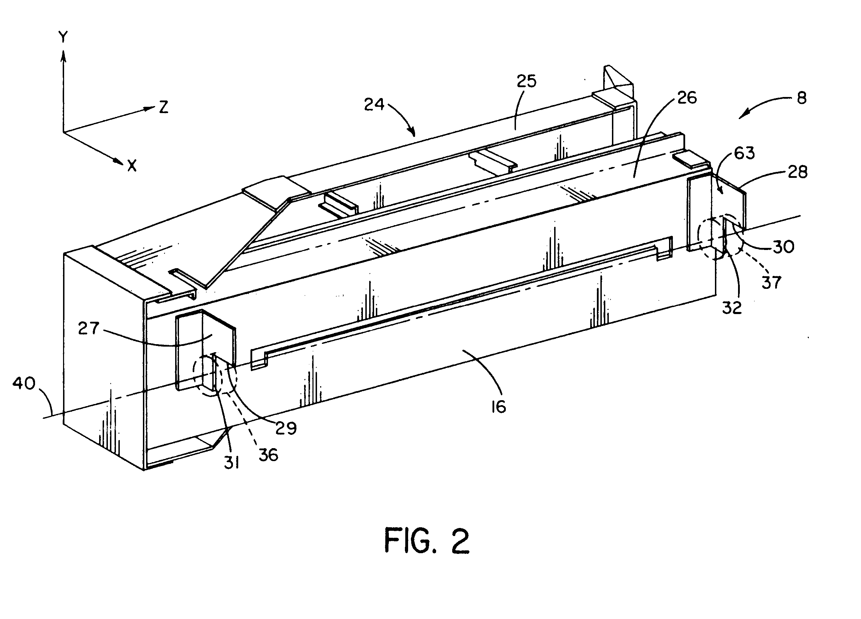

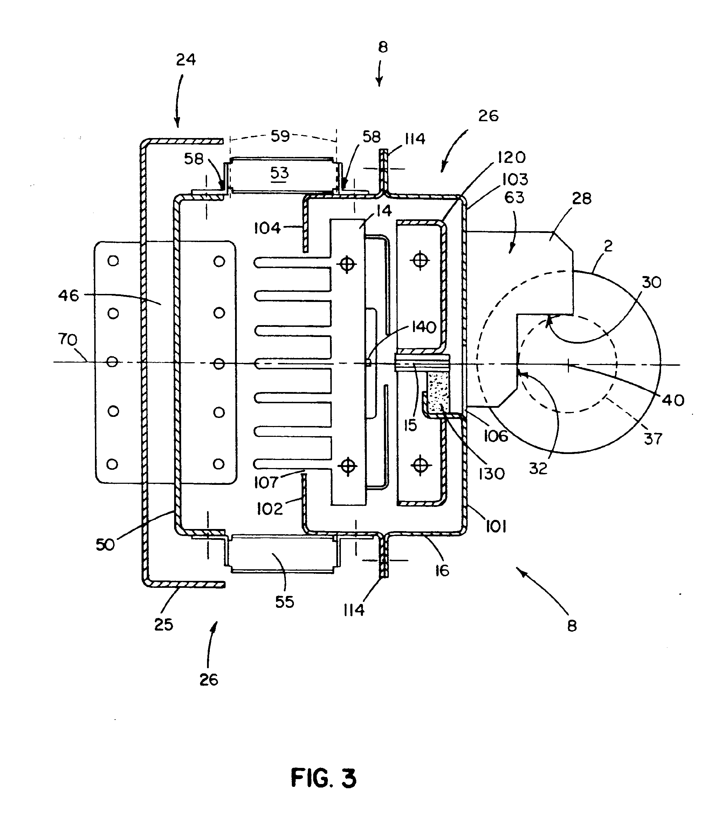

According to Figs. 2 and 3, the exposure station 8 includes a printhead assembly and a mount 24 for the printhead assembly. The printhead assembly includes both a linear printhead 14, having a linearly arranged source or sources of radiation, for example, LED's 140 and a linear focusing means, for example, a conventional gradient index lens array 15. The LED printhead 14 and the lens array 15 are optically located with respect to each other by a rigid box-like support housing 16 and define an optical axis or axes 70. The rigid support housing 16 includes locating members 27 and 28 having orthogonal, relatively linear locating surfaces 29 and 30 which are parallel to the x axis and 31 and 32 which are parallel to the y axis. A planar locating surface 63 is located on location member 28.

The printhead assembly 14 and 15 and support housing 16 with locating members 27 and 28 are precisely constructed as a unit, herein called a "printhead writer assembly" 26. Accuracy of the system in high resolution printing depends upon the accuracy in locating printhead 14 and lens 15 with respect to locating surfaces 29-32 and each other. The rest of the exposure station 8 serves to hold the writer assembly in position with respect to printhead roller 2 and will be more fully described below.

Locating surfaces 29-32 are intended to mate with bearing surfaces 36 and 37, shown in phantom in Fig. 2 and which are part of printhead roller 2. Bearing surfaces 36 and 37 could also be part of the mounting structure for roller 2, providing they maintain a precise relation with roller 2. Bearing surfaces 36 and 37 are locating surfaces which cooperate with locating surfaces 29-32 to position the printhead assembly so that an image of LED's 140 is projected by lens 15 in focus on belt 1 as belt 1 is supported by printhead roller 2.

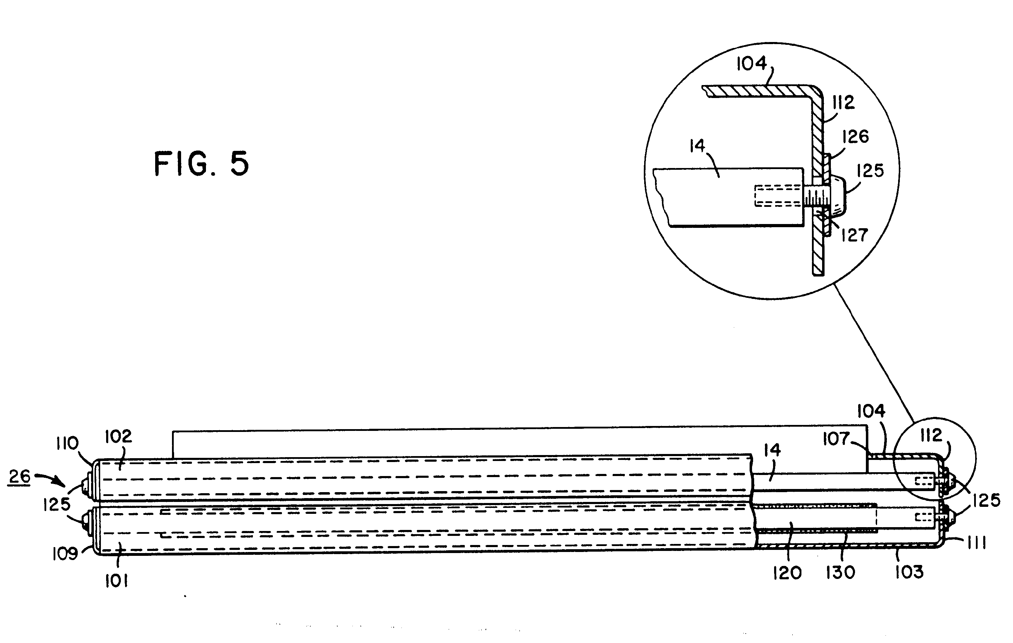

The printhead writer assembly 26 can be best seen with respect to Figs. 3-5. Rigid box-like support housing 16 includes a front housing portion 101 and a rear housing portion 102. The front housing portion 101 includes a front wall 103 to which locating members 27 and 28 (not snown in Fig. 5) are fixed and also includes an elongated aperture 106. Rear housing portion 102 has a rear wall 104 with a rear aperture 107.

Front and rear housing portions 101 and 102 each have end walls 109, 110, 111 and 112. Top and bottom walls to each housing portion contain right-angle flanges 114 which can be bolted, screwed or riveted together to form the completed support housing 16.

Linear printhead 14 is attached to rear housing portion 102 and lens array 15 is attached to front housing portion 101. Lens array 15 is fixed to a lens stiffener 120. As best seen in Fig. 5, fastening pins, for example, screws 125 are placed through washers 126 and through large apertures 127 in end walls 109 and 111 in front housing portion 101 and into lens stiffener 120. Similarly, printhead 14 which supports LED's 140 is mounted in similar apertures 127 in end walls 110 and 112 in rear housing portion 102.

In assembly, printhead 14 and lens array 15 are separately mounted in rear housing portion and front housing portions 102 and 101, respectively, with the screws 125 loosely in apertures 127. The two housing portions are then attached together at flanges 114 and the entire writer assembly 26 is mounted on a suitable optical instrument which includes members which simulate bearing surfaces 36 and 37 and web 1 for which the writer assembly 26 is intended. More specifically, locating members 27, 28 with locating surfaces 29-32 are placed on bearing surfaces simulating bearing surfaces 36 and 37. Fixed with respect to the surfaces simulating bearing surfaces 36 and 37 is a surface which simulates the web 1, i.e., the exposure locus of the apparatus, which surface can be a suitable reflecting surface upon which an image of the LED's 140 can be visually examined, a detector or a mirror to reflect that image to a detector. LED's 140 are turned on and the image is examined visually or electronically at the simulated exposure locus. Screws 125 are moved to the extent allowed by apertures 127 until LED's 140 and lens array 15 are positioned to project a focused image of LED's 140 at the desired locus. At this point, washers 126 which contain apertures which are a tight fit with screws 125 are adhesively fixed to end walls 109, 110, 111 and 112 to fix printhead 14 and lens array 15 in optically aligned positions. At this point, writer assembly 26 can be attached to the rest of the exposure station 8 for mounting in apparatus having printhead roller 2, belt 1 and bearing surfaces 36 and 37. Further adjustment within writer assembly 26 is not necessary providing the relationship between bearing surfaces 36 and 37 and belt 1 are the same for the printer as their simulated counterparts.

Rigid box-like support housing 16 is made of fairly heavy gauge metal (for example, .062 inch steel) which is not readily deformed. The lens array 15 and printhead 14 are not directly connected to each other but are instead fixed to separate housing portions 101, 102 of the rigid housing 16. With this structure, optical alignment of the LED's 140 and lens array 15 with locating members 27 and 28 is readily maintained despite substantial handling. It has been found that with this structure realignment in the field is not necessary and, in fact, if constructed as specifically described is not possible. If one of the optical components is or becomes misaligned, that misalignment is not passed on to the other component because of the independence of their mounting.

In usage, the LED's generate heat as well as light. Thus the printhead will heat up and expand relative to the housing 16. This is compensated for by movement of the head of screws 125 supporting printhead 14, away from washers 126 as the screws move in the holes in the washers as printhead 14 expands.

A foam insert 130 positioned below the front portion of lens array 15 serves to trap stray light and provides a contamination barrier for dust.

None of the parts used in the writer assembly 26 require machined or precise tolerances. Cost is extremely low for volume production.

Even though the housing is a two-part structure, flanges 114 form a central stiffening rib which resists bending and twisting in the focal direction. Thus, a highly rigid structure is realized without having to make the printhead and lens stiffener extremely thick themselves.

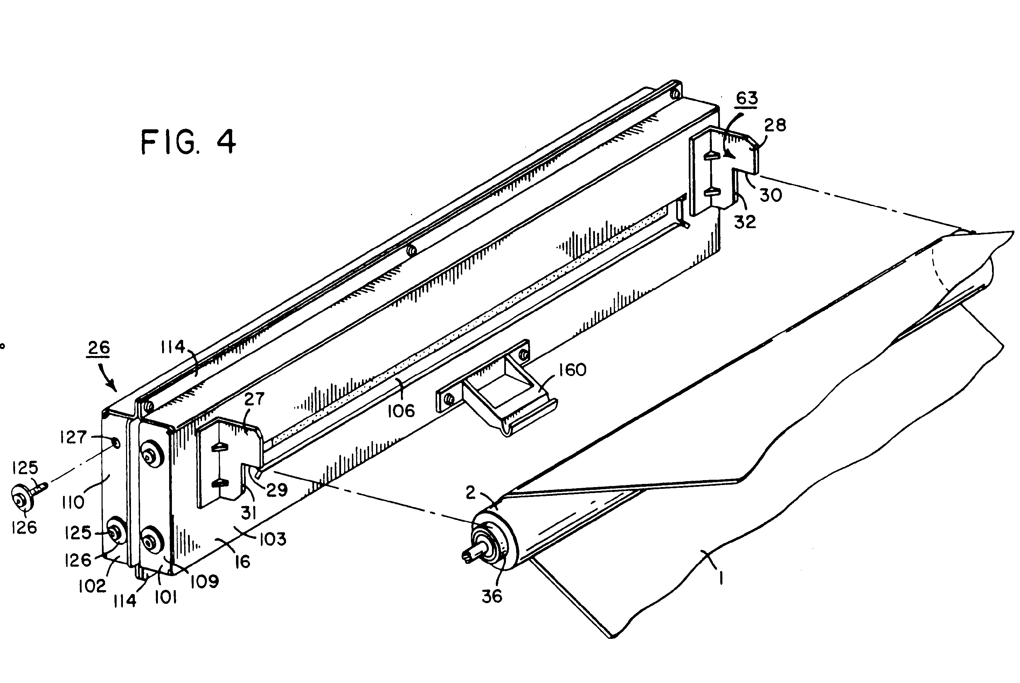

Because the writer assembly is accurately positioned relative to belt and also because it is a very rigid structure it can be used to locate other components in the apparatus. For example, a mount 160 for an electrometer is shown in Fig. 4 attached to the front wall of front housing portion 101. With this structure an electrometer carried in mount 160 can have a very precise location with respect to belt 1 without an additional separate mounting for it.

Printhead roller 2 will have variations in position and orientation. This is due to manufacturing tolerances in general and the fact that it is in a film core 9 which is removable. The location of roller 2 with respect to the frame of the apparatus is through the core and its mounting (not shown). The focal length of the lens array 15 is extremely short, giving very little depth of focus and requiring precise positioning of the printhead assembly with respect to roller 2. Mount 24 has been designed to maintain that precise positioning despite previously mentioned variances in position and orientation of roller 2.

Fig. 2 shows a set of three orthogonal axes x, y and z which will be used to better explain the operation of mount 24. The x axis is parallel to optical axes 70 (Fig. 3). The z axis (Fig. 2) is parallel to the primary axis 40 of roller 2. The y axis is a vertical axis (as shown) and is orthogonal to the x and z axes. Because roller 2 rotates about primary axis 40, there is a tendency for the writer assembly 26 also to rotate about the primary axis. This rotation is prevented by mount 24 but virtually all other types of movement with change in position and orientation of roller 2 are permitted by a set of flexure members supporting the writer assembly 26 with respect to the frame of the apparatus.

## Claims

1. A linear printhead assembly (26) comprising a linear source of radiation (14, 140), a linear light focusing means (15), a support (102) for supporting said source, a support (101) for supporting said focusing means, means (114, 125) for fixing said supports, means defining a plurality of apertures (127) and a plurality of pins (125), one received in each said aperture (127), each of said pins being small in cross-section compared to its respective aperture, characterized by said apertures (127) being provided in at least one of said supports, with said pins being fixed with respect to either that support's linear source of radiation (14) or linear light focusing means (15), and by a washer (126) around each pin, said washer being fixed by adhesive to said aperture defining means (127) and each washer (126) having an opening restricting lateral movement of its respective pin (125), but permitting longitudinal sliding movement of said pin (125).

## Revendications

1. Tête d'impression linéaire (26) comprenant une source linéaire de rayonnement (14, 140), un agencement linéaire de focalisation du rayonnement (15), un support (102) pour supporter ledit agencement, des moyens (114, 125) pour fixer lesdits supports, et des moyens définissant une pluralité d'ouvertures (127) et une pluralité de broches (125) ; chaque broche étant destinée à coopérer avec une ouverture (127) et présentant une section droite petite comparée à la dimension de l'ouverture qui lui est associée, tête caractérisée en ce que les ouvertures (127) sont réalisées dans au moins l'un des supports, et les broches sont fixées par rapport soit aux supports de la source linéaire de rayonnement (14) soit à l'agencement de focalisation (15) et en ce que l'on dispose autour de chaque broche une rondelle (126) qui est collée au moyen un adhésif sur les moyens (127) définissant chaque ouverture et qui présente une ouverture restreignant les déplacement latéraux des broches (125) respectives tout en autorisant le coulissement longitudinal desdites broches (125).

## Patentansprüche

1. Lineare Druckkopfanordnung (26) mit einer linearen Strahlungsquelle (14, 140), einer linearen Lichtfokussiervorrichtung (15), einem Träger (102) zum Haltern der Strahlungsquelle, einem Träger (101) zum Haltern der Fokussiervorrichtung, Mitteln (114, 125) zum Befestigen der Träger, einer eine Vielzahl von Öffnungen (127) und eine Vielzahl von Nadeln (125) aufweisenden Vorrichtung, wobei jeweils eine Nadel in jeder Öffnung (127) sitzt und jede Nadel im Vergleich zu ihrer jeweiligen Öffnung einen kleinen Querschnitt hat,
**dadurch gekennzeichnet, daß** die Öffnungen (127) in mindestens einem der Träger vorgesehen und die Nadeln entweder an der linearen Strahlungsquelle (14) oder der linearen Fokussiervorrichtung (15) des entsprechenden Trägers befestigt sind und daß ein Dichtungsring (126) um jede Nadel herum vorgesehen ist, der mittels eines Klebstoffs an der die Öffnungen aufweisenden Vorrichtung (127) befestigt ist und eine Öffnung besitzt, die eine Bewegung der jeweiligen Nadel (125) in seitlicher Richtung begrenzt, jedoch eine in Längsrichtung erfolgende Schiebebewegung zuläßt.
